# EUROPEAN PATENT SPECIFICATION

(11) **EP 3 945 709 B1**
(45) Date of publication and mention of the grant of the patent: **04.09.2024**
(21) Application number: 21187499.5
(22) Date of filing: 23.07.2021
(51) Int. Cl.: H04W 76/15, H04L 41/082

(54) **METHOD FOR SELECTING THE TRANSPORT NETWORK LAYER ASSOCIATION (TNLA) WITHIN 5G RAN SYSTEMS**
VERFAHREN ZUR AUSWAHL DER TRANSPORTNETZSCHICHTZUORDNUNG (TNLA) INNERHALB VON 5G RAN-SYSTEMEN
PROCÉDÉ DE SÉLECTION DE L'ASSOCIATION DE LA COUCHE DE RÉSEAU DE TRANSPORT (TNLA) DANS LES SYSTÈMES RAN 5G

(30) Priority: 27.07.2020 IN 202021032127; 22.07.2021 US 202117382594
(43) Date of publication of application: 02.02.2022
(73) Proprietor: Mavenir Systems, Inc., Richardson, TX 75081 (US)
(72) Inventor: Srinivasan, Sundararajan, 560037 Bangalore (IN)
(74) Representative: Studio Torta S.p.A.

(56) References cited:
- EP-A1- 3 700 291
- WO-A1-2019/076182
- US-A1- 2019 075 023
- INTEL CORPORATION: "On multiple SCTP associations for NG-C", vol. RAN WG3, no. Reno, Nevada, US, Prague; 20171127 - 20171201, 17 November 2017 (2017-11-17), XP051373202, Retrieved from the Internet <URL:http://www.3gpp.org/ftp/tsg%5Fran/WG3%5FIu/TSGR3%5F98/Docs/> [retrieved on 20171117]

## Description

### BACKGROUND OF THE DISCLOSURE

### 1. Field of the Disclosure

The present disclosure relates to systems and methods for Radio Access Networks (RANs), and relates more particularly to Cloud RANs (C-RANs) for 4^{th}-Generation (4G) and 5^{th}-Generation (5G) based mobile networks.

### 2. Description of the Related Art

Conventional RANs were built employing an integrated unit where the entire RAN was processed. Conventional RANs implement the protocol stack (e.g., Physical Layer (PHY), Media Access Control (MAC), Radio Link Control (RLC), Packet Data Convergence Control (PDCP) layers) at the base station (also referred to as the evolved node B (eNodeB or eNB) for 4G LTE or next generation node B (gNodeB or gNB) for 5G NR). In addition, conventional RANs use application specific hardware for processing, which make the conventional RANs difficult to upgrade and evolve. As future networks evolve to have massive densification of networks to support increased capacity requirements, there is a growing need to reduce the capital and operating costs of RAN deployment and make the solution scalable and easy to upgrade.

Cloud-based Radio Access Networks (CRANs) are networks where a significant portion of the RAN layer processing is performed at a baseband unit (BBU), located in the cloud on commercial off the shelf servers, while the radio frequency (RF) and real-time critical functions can be processed in the remote radio unit (RRU), also referred to as the radio unit (RU). The BBU can be split into two parts: centralized unit (CU) and distributed unit (DU). CUs are usually located in the cloud on commercial off the shelf servers, while DUs can be distributed. The BBU may also be virtualized, in which case it is also known as vBBU. Radio Frequency (RF) interface and real-time critical functions can be processed in the remote radio unit (RRU).

The CUs and DUs are connected through the Stream Control Transport Protocol (SCTP) and through the control plane application protocol F1-C as mentioned in 3GPP TS38.473 F1-C Interface Specification. 3GPP standards also allow multiple SCTP association (e.g., using Transport Network Layer Association (TNLA)) between the CU and DU. The context of this invention is related to a method to select specific TNLA for UE, based on the load balancing criteria among all the available TNLAs.

In the C-RAN architecture, CU would require multiple IP address(es) for its communication with DU through the F1 interface. Multiple IP address(es) are needed for scalability and resiliency. 3GPP has defined a method to add multiple CU IP addresses between CU and DU, as explained below.

First, CU asks the DU to add new TNLA (new SCTP connection) using F1-C message gNB-CU Configuration Update by providing the new gNB-CU IP address. Second, DU initiates the SCTP connection (TNLA) towards the new gNB-CU IP address. Third, after the successful SCTP connection, DU replies to CU with gNB-CU Configuration Update Acknowledge message. After this procedure, more than one TNLAs are available between the CU and DU. When Radio Resource Control (RRC) connection needs to be established for any new UE (i.e., to service the new UE), DU sends the F1-C message "Initial UL RRC Message transfer" to CU. At this point in time, DU needs to choose one of the available TNLAs for this UE. As more than one TNLAs are available, DU needs to implement a method (e.g., involving an algorithm) via which specific TNLA shall be selected for the UE. Currently, 3GPP specification doesn't define any TNLA selection method for the UE.

Similar method (e.g., involving an algorithm) is needed in the Xn-C interface which can be provided between two gNBs (see, e.g., 3GPP TS38.423 Xn-C Interface Specification). This interface is mainly used to initiate the Xn-C handover for the UE. During the handover initiation, source gNB needs to select the specific TNLA among the available TNLAs between the gNBs.

Given the absence of a known method (e.g., an algorithm) for TNLA selection, DU may choose one of the available TNLAs in a round-robin or random manner. However, the selected TNLA might already be overloaded with many UEs, which leads to load misbalancing across the multiple TNLAs. To overcome the load misbalancing, CU needs to modify the TNLA of the UEs to ensure that loads (UEs) across the TNLAs are properly distributed. Accordingly, this conventional approach is a trial-and-error process, i.e., DU selecting the inappropriate TNLA and CU correcting the same, which is not an optimal solution.

Therefore, there is a need for an improved method for selecting a specific TNLA among multiple available TNLAs, e.g., a method to select a specific TNLA for any new UEs based on the load balancing criteria among all the available TNLAs.

Document US2019/075023 relates to the field of wireless networks. More particularly, the present disclosure relates to F1 interface arrangement configuration within a network that implements virtualized NodeBs.

Document WO2019/076182 relates to the field of communications technologies, and in particular, to a connection processing method and device in a Central Unit (CU)-Distributed Unit (DU) architecture.

Document EP3700291 relates to the field of communication technology, in particular to an association handling method and a device in a central unit (CU)-distributed unit (DU) architecture.

### SUMMARY OF THE DISCLOSURE

The present invention relates to a method of enabling a Cloud Radio Access Network, C-RAN,- compatible central unit, CU, to modify at least one dynamic Transport Network Layer Association, TNLA, in communication with a C-RAN-compatible distributed unit, DU, according to claim 1.

The present disclosure provides a method for selecting a specific TNLA among multiple available TNLAs, e.g., a method to select a specific TNLA for any new UEs based on the load balancing criteria among all the available TNLAs. The TNLA selection according to an example embodiment of the present disclosure applies to both CU control plane (CU-CP) and CU user plane (CU-UP).

The example method according to the present disclosure provides addition of weight factor for each TNLA.

In a first example, e.g., for F1-C interface, the present disclosure defines weight factor for each TNLA between CU and DU. CU determines the weight factor for each TNLA based on its operating conditions and/or capacity of each TNLA. CU then communicates the determined weight factor for each TNLA to DU using the F1-C message "gNB-CU Configuration Update message". DU stores the weight factor for each TNLA and uses the weight factor to select the specific TNLA for any new UEs.

In a second example, e.g., for Xn-C interface, CU determines the weight factor for each TNLA based on its operating conditions and/or capacity of each TNLA, and CU communicates the determined weight factor for each TNLA to peer gNB CU using the Xn-C interface. Peer gNB CU stores the weight factor for each TNLA and uses the weight factor to select the specific TNLA for any new UEs towards the CU. For this example embodiment, the relevant 3GPP specification reference is 3GPP TS38.423.

In a third example, e.g., for E1 interface, CU user plane (CU-UP) determines the weight factor for each TNLA based on its operating conditions and/or capacity of each TNLA, and CU-UP communicates the determined weight factor for each TNLA to CU control plane (CU-CP) using the E1 interface. CU-CP stores the weight factor for each TNLA and uses the weight factor to select the specific TNLA for any new bearer creation for the UEs towards CU-UP. For this example embodiment, the relevant 3GPP specification reference is 3GPP TS38.463.

The present disclosure is intended to encompass 4G, 5G and other wireless systems that are C-RAN compliant.

### BRIEF DESCRIPTION OF THE FIGURES

FIG. 1 illustrates an example embodiment of a method according to the present disclosure.
FIG. 2 illustrates another example embodiment of a method according to the present disclosure.
FIG. 3 illustrates another example embodiment of a method according to the present disclosure.

### DETAILED DESCRIPTION

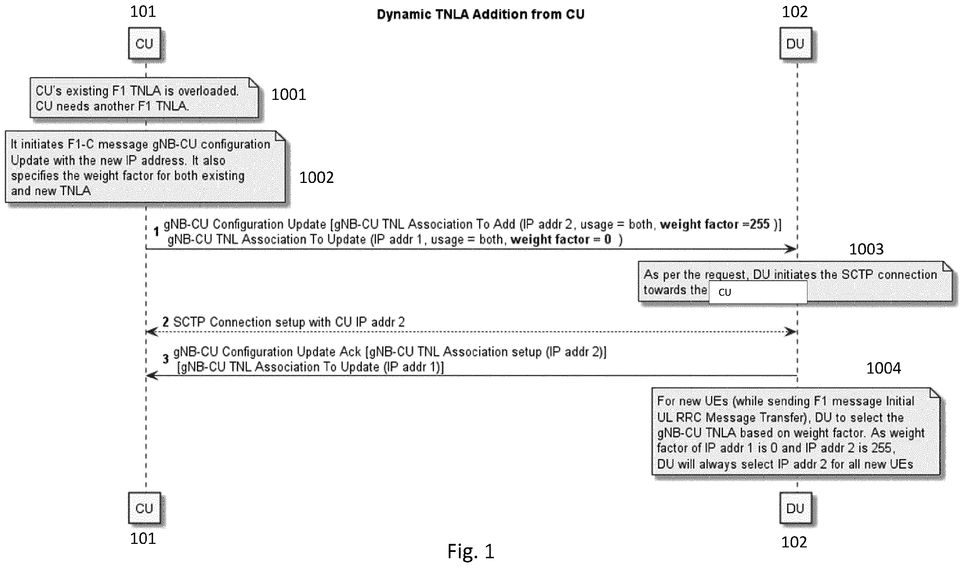

FIG. 1 illustrates an example embodiment of a method according to the present disclosure, e.g., utilizing F1-C interface, which example embodiment provides a dynamic TNLA addition procedure from CU, i.e., how CU 101 shall request DU 102 to add new TNLA with a weight factor. In this example, a new TNLA is needed at CU's F1 interface due to the existing TNLA being overloaded, i.e., the existing TNLA IP address (IP address 1) is at its maximum capacity in terms of handling new user equipments (UEs), as shown at block 1001. Once a new TNLA is created, CU 101 then communicates, e.g., as summarized in block 1002, the determined weight factor for each TNLA to DU 102 using the F1-C message "gNB-CU Configuration Update" message. CU 101 wants all new UEs to use the newly created TNLA, so CU 101 i) sets the weight factor for the existing TNLA (associated with IP address 1), e.g., as zero, and ii) sets the weight factor for the newly created TNLA, e.g., as 255, which assignments are illustrated with the process arrow designated "1" in FIG. 1. As per the request, DU 102 initiates the Stream Control Transport Protocol (SCTP) connection towards the CU 101, as shown at block 1003. The initiation of the SCTP connection towards the new gNB-CU IP address (e.g., CU IP address 2) is illustrated with the process arrow designated "2" in FIG. 1. After the successful SCTP connection, DU 102 shall reply to CU 101 with "gNB-CU Configuration Update Acknowledge" message, as illustrated with the process arrow designated "3" in FIG. 1. With these weight assignments, for any new UEs (as represented by Radio Resource Control (RRC) connection), DU 102 will automatically select the new TNLA, as shown at block 1004. Although zero and 255 are used as example weight factors in this embodiment, other relative weight factors can be utilized for implementing the selection of the new TNLA, e.g., a first weight factor (e.g., any non-zero weight factor) indicating a required selection of the new TNLA, and a second weight factor indicating a required non-selection of the existing TNLA (e.g., zero weight factor). Once the load of both TNLAs is equalized, the respective weight factors can be updated by CU 101 to be the same value for both TNLAs. Although the example embodiment of the method shown in FIG. 1 has been explained in connection with F1-C interface, the example method is also applicable for E1 and Xn-c interfaces.

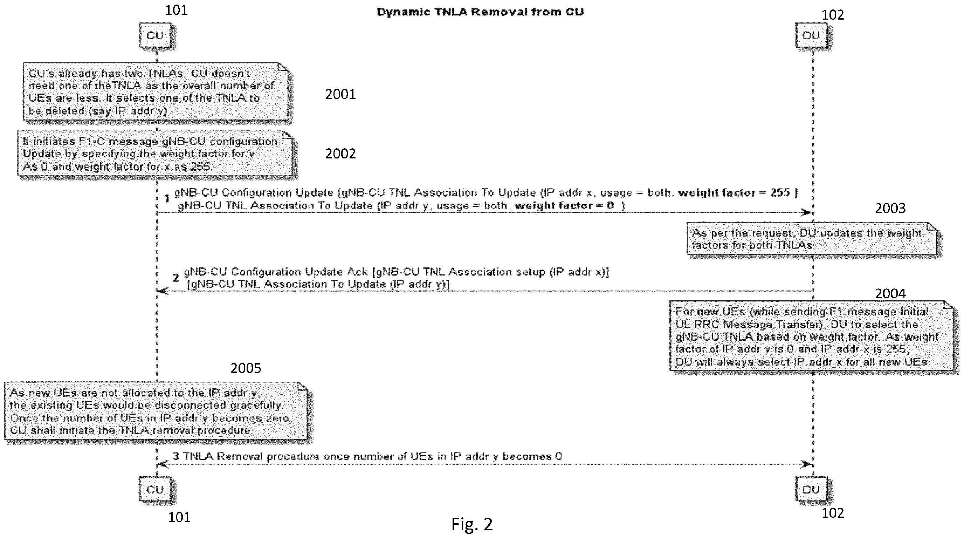

FIG. 2 illustrates an example embodiment of a method according to the present disclosure, e.g., utilizing F1-C interface, which example embodiment provides a dynamic TNLA deletion procedure from CU 101, i.e., when CU 101 wants to remove one of the TNLAs, e.g., due to low resource usage among the TNLAs. As illustrated in block 2001, CU already has two available TNLAs in this example, but CU doesn't need one of the TNLAs because the overall number of UEs is low. In this example embodiment, instead of terminating the TNLA connection abruptly, CU 101 asks DU 102 not to allocate new UEs to the "to-be-deleted" TNLA (e.g., associated with IP address y). As summarized in block 2002, CU 101 initiates the process by communicating the determined weight factor for each TNLA to DU 102 using the F1-C message "gNB-CU Configuration Update" message. CU 101 wants all new UEs to use the "to-be-retained" TNLA (e.g., associated with IP address x), so CU 101 i) sets the weight factor for the "to-be-deleted" TNLA (associated with IP address y), e.g., as zero, and ii) sets the weight factor for the "to-be-retained" TNLA, e.g., as 255, which assignments are illustrated with the process arrow designated "1" in FIG. 2. As per the request, DU 102 updates the respective weight factors for the two TNLAs, and DU 102 sends to CU 101 a "gNB-CU Configuration Update Acknowledge" message, as shown in block 2003 and illustrated with the process arrow designated "2" in FIG. 2. With these weight assignments, for any new UEs, DU 102 will automatically select the "to-be-retained" TNLA (associated with IP address x), as shown at block 2004. As new UEs are not allocated to the "to-be-deleted" TNLA (associated with IP address y), the existing UEs will be disconnected from the "to-be-deleted" TNLA gradually and gracefully, as summarized in block 2005. Once the number of UEs in the "to-be-deleted" TNLA (associated with IP address y) becomes 0, TNLA removal procedure (e.g., as specified in 3GPP TS38.473) for the "to-be-deleted" TNLA can be triggered (as illustrated with the process arrow designated "3" in FIG. 2), thereby achieving a graceful shutdown for the "to-be-deleted" TNLA. Although zero and 255 are used as example weight factors in this embodiment, other relative weight factors can be utilized for implementing the selection of the "to-be-retained" TNLA, e.g., a first weight factor indicating a required selection of the "to-be-retained" TNLA (e.g., any non-zero weight factor), and a second weight factor indicating a required non-selection of the "to-be-deleted" TNLA (e.g., zero weight factor). Although the example embodiment of the method shown in FIG. 2 has been explained in connection with F1-C interface, the example method is also applicable for E1 and Xn-c interfaces.

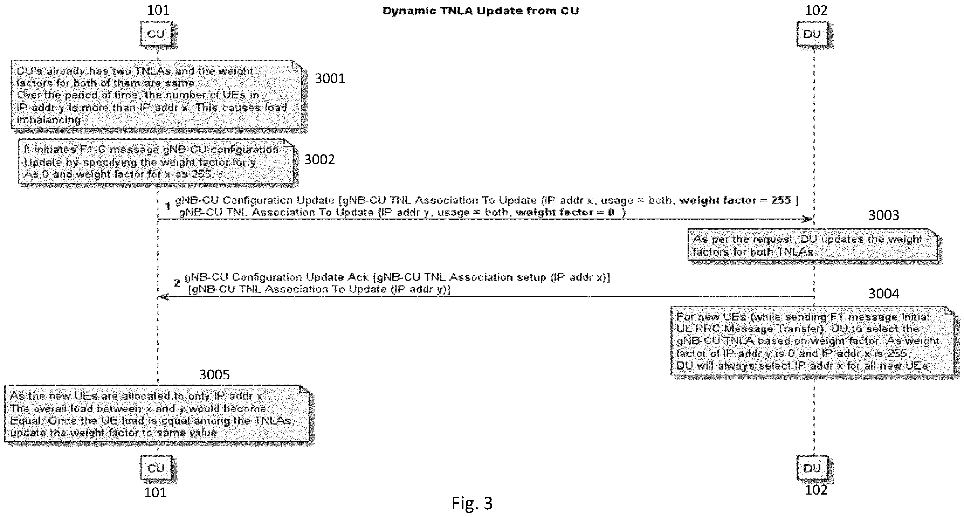

FIG. 3 illustrates an example embodiment of a method according to the present disclosure, e.g., utilizing F1-C interface, which example embodiment provides a dynamic TNLA update procedure from CU 101 to address a load imbalance that develops among multiple TNLAs, e.g., when the number of UEs in one TNLA becomes less than the number of UEs in the other TNLA over time, which scenario is summarized in block 3001. In this example scenario, CU 101 achieves dynamic load balancing by having all new UEs selecting the "least loaded" TNLA (associated with IP address x) over the "most loaded TNLA" (associated with IP address y). As summarized in block 3002, CU 101 initiates the process by communicating the determined weight factor for each TNLA to DU 102 using the F1-C message "gNB-CU Configuration Update" message. CU 101 wants all new UEs to use the "least loaded" TNLA (e.g., associated with IP address x), so CU 101 i) sets the weight factor for the "most loaded" TNLA (associated with IP address y), e.g., as zero, and ii) sets the weight factor for the "least loaded" TNLA (associated with IP address x), e.g., as 255, which assignments are illustrated with the process arrow designated "1" in FIG. 3. As per the request, DU 102 updates the respective weight factors for the two TNLAs, as shown in block 3003, and DU 102 sends to CU 101 a "gNB-CU Configuration Update Acknowledge" message, as illustrated with the process arrow designated "2" in FIG. 3. With these weight assignments, for any new UEs, DU 102 will automatically select the "least loaded" TNLA (associated with IP address x, having a weight factor of 255), as shown at block 3004. As new UEs are not allocated to the "most loaded" TNLA (associated with IP address y) and only allocated to the "least loaded" TNLA (associated with IP address x), over time the overall UE load imbalance between the "most loaded" TNLA (associated with IP address y) and the "least loaded" TNLA (associated with IP address x) disappears. Although zero and 255 are used as example weight factors in this embodiment, other relative weight factors can be utilized for implementing the selection of the "least loaded" TNLA, e.g., a first weight factor indicating a required selection of the "least loaded" TNLA (e.g., any non-zero weight factor), and a second weight factor indicating a required non-selection of the "most loaded" TNLA (e.g., zero weight factor). Once the UE load for the "least loaded" TNLA has become equal to the UE load for the "most loaded" TNLA, the respective weight factors can be updated by CU 101 to be the same value for both TNLAs, as summarized in block 3005. Although the example embodiment of the method shown in FIG. 3 has been explained in connection with F1-C interface, the example method is also applicable for E1 and Xn-c interfaces.

In another example embodiment, e.g., utilizing Xn-C interface, CU determines the weight factor for each TNLA based on its operating conditions and/or capacity of each TNLA, and CU communicates the determined weight factor for each TNLA to peer gNB CU using the Xn-C interface. Peer gNB CU stores the weight factor for each TNLA and uses the weight factor to select the specific TNLA for any new UEs towards the CU. For this example embodiment, 3GPP specification reference is 38.423.

In yet another example embodiment, e.g., utilizing E1 interface, CU user plane (CU-UP) determines the weight factor for each TNLA based on its operating conditions and/or capacity of each TNLA, and CU-UP communicates the determined weight factor for each TNLA to CU control plane (CU-CP) using the E1 interface. CU-CP stores the weight factor for each TNLA and uses the weight factor to select the specific TNLA for any new bearer creation for the UEs towards CU-UP. For this example embodiment, 3GPP specification reference is 38.463.

In connection with the example embodiments described herein, several changes are proposed for 3GPP specifications, as explained in detail below.

### Changes to 3GPP TS38.473 Specification

Specific changes to F1-C interface specification (TS38.473) are described below, and similar changes are applicable in the other 3GPP specifications relating to Xn-C interface (TS38.423) and E1 interface (TS38.463).

In section "8.2.5 gNB-CU Configuration", the following changes shall be made (newly added text is underlined):
If the TNL Association usage or the TNL Address Weight Factor IE is included in the gNB-CU TNL Association To Add List IE or the gNB-CU TNL Association To Update List IE, the gNB-DU node shall, if supported, use it as described in TS 38.472.

The following new IE shall be added:

### a.b.c.d TNL Address Weight Factor

### This IE indicates the weight factor of the TNL address.

| IE/Group Name | Presenc e | Range | IE type and reference | Semantics description |
|---|---|---|---|---|
| TNL Address Weight Factor | M | | INTEGER (0..255) | Value 0 indicates the TNL address is not permitted for the initial UL RRC Message transfer. If the value for each TNL address is the same, gNB-DU shall select the TNL address alternatively for the UEs |

As part of section "9.2.1.10 GNB-CU CONFIGURATION UPDATE", the following new IEs shall be added (newly added text is underlined):

| IE/Group Name | Presence | Range | IE type and reference | Semantics description | Criticality | Assigned Criticality |
|---|---|---|---|---|---|---|
| gNB-CU TNL Association To Add List | | 0..1 | | | YES | ignore |
| >gNB-CU TNL Association To Add Item lEs | | 1..<maxnoofTN LAssociations> | | | EACH | ignore |
| >>TNL Association Transport Layer Information | M | | CP Transport Layer Address 9.3.2.4 | Transport Layer Address of the gNB-CU. | - | |
| >>TNL Association Usage | M | | ENUMERA TED (ue, non-ue, both, ...) | Indicates whether the TNL association is only used for UE-associated signalling, or non-UE-associated signalling, or both. For usage of this IE, refer to TS 38.472 [22]. | - | |
| **>>TNL Address Weight Factor** | **O** | | **a.b.c.d** | | **-** | |
| gNB-CU TNL Association To Update List | | 0..1 | | | YES | ignore |
| >gNB-CU TNL Association To Update Item lEs | | 1..<maxnoofTN LAssociations> | | | EACH | ignore |
| >>TNL Association Transport Layer Address | M | | CP Transport Layer Address 9.3.2.4 | Transport Layer Address of the gNB-CU. | - | |
| >>TNL Association Usage | O | | ENUMERA TED (ue, non-ue, both, ...) | Indicates whether the TNL association is only used for UE-associated signalling, or non-UE-associated signalling, or both. For usage of this IE, refer to TS 38.472 [22]. | - | |
| **>>TNL Address Weight Factor** | **O** | | **a.b.c.d** | | **-** | |

### ASN.1 Changes to 3GPP TS38.473

The following changes shall be made (text additions underlined):

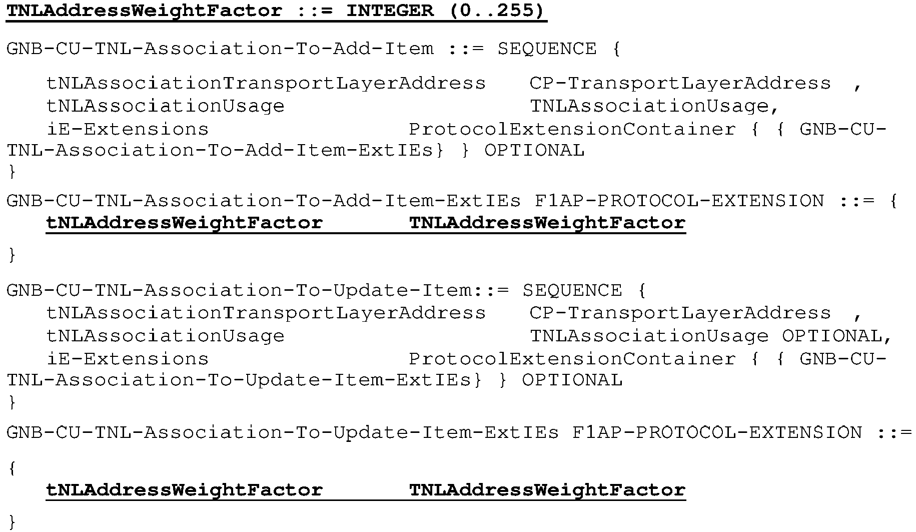

### Changes to 3GPP 38.401 Specification

In section "8.8 Multiple TNLAs for F1-C", the following shall be added:
gNB-DU shall select the TNLA for the UE based on the TNL address weight factor IE provided by gNB-CU

### GLOSSARY OF TERMS

3GPP: Third generation partnership project
CAPEX: Capital Expenditure
COTS: Commercial off-the-shelf
CP: Control plane
C-RAN: cloud radio access network
CU: Central unit
DU: Distribution unit
FDD: Frequency-division duplex
gNB: Next Generation Node B
NR: New radio
OPEX: Operational Expenditure
RAN: Radio Access Network
RRC: Radio Resource Control
SCTP: Stream Control Transport Protocol
TNLA: Transport Network Layer Association
UE: User Equipment
UP: User plane

## Claims

1. A method of enabling a Cloud Radio Access Network, C-RAN,- compatible central unit, CU, to modify at least one dynamic Transport Network Layer Association, TNLA, in communication with a C-RAN-compatible distributed unit, DU, comprising:
communicating, by the CU to the DU, assigned first weight factor associated with a first TNLA and assigned second weight factor associated with a second TNLA, wherein at least one of i) the assigned first weight factor associated with the first TNLA indicates required selection, and ii) the assigned second weight factor for the second TNLA indicates required non-selection;
updating, by the DU, the first and second weight factors for the first and second TNLAs, respectively; and
automatically selecting, by the DU, the first TNLA for any new UE requiring service,
**characterized in that**:
the first TNLA is the TNLA to be retained, and the second TNLA is the TNLA to be deleted; and
the number of UEs assigned to the second TNLA is reduced to zero after a period of time based on the assigned first and second weight factors.

2. The method according to claim 1, wherein the first and second weight factors are communicated to the DU using a "gNB-CU Configuration Update" message.

3. The method according to claim 1, further comprising:
initiating a deletion of the second TNLA after the number of UEs assigned to the second TNLA is reduced to zero.

4. The method according to claim 1, wherein:
the first TNLA is initially less loaded with UEs in comparison to the second TNLA; and
the number of UEs assigned to the first TNLA becomes substantially equal to the number of UEs assigned to the second TNLA after a period of time based on the assigned first and second weight factors.

5. The method according to claim 4, wherein the first and second weight factors are communicated to the DU using a "gNB-CU Configuration Update" message.

6. The method according to claim 4, further comprising:
updating, by the CU, the first and second weight factors to be equal after the number of UEs assigned to the first TNLA becomes substantially equal to the number of UEs assigned to the second TNLA.

7. The method according to claim 1, wherein at least the communicating step is performed using F1-C interface.

## Patentansprüche

1. Verfahren zum Ermöglichen, dass eine Cloud-Radiozugangsnetz(Cloud Radio Access Network, C-RAN)-kompatible Zentraleinheit (central unit CU) mindestens eine dynamische Transport-/Vermittlungsschicht-Assoziation (Transport Network Layer Association, TNLA) in Kommunikation mit einer C-RAN-kompatiblen verteilten Einheit (DU) modifiziert, umfassend:
Übermitteln, durch die CU an die DU, eines zugewiesenen ersten Gewichtungsfaktors, der einer ersten TNLA zugeordnet ist, und eines zugewiesenen zweiten Gewichtungsfaktors, der einer zweiten TNLA zugeordnet ist, wobei mindestens eines der Folgenden gilt: i) der zugewiesene erste Gewichtungsfaktor, der der ersten TNLA zugeordnet ist, gibt erforderliche Auswahl an und ii) der zugewiesene zweite Gewichtungsfaktor für die zweite TNLA gibt erforderliche Nicht-Auswahl an,
Aktualisieren, durch die DU, des ersten und des zweiten Gewichtungsfaktors für die erste bzw. die zweite TNLA und
automatisches Auswählen, durch die DU, der ersten TNLA für jegliches neue UE, das einen Dienst benötigt,
**dadurch gekennzeichnet, dass**
die erste TNLA die beizubehaltende TNLA ist und die zweite TNLA ist die zu löschende TNLA ist und
die Anzahl an der zweiten TNLA zugewiesenen UEs nach einem Zeitraum, der auf dem zugewiesenen ersten und zweiten Gewichtungsfaktor basiert, auf Null verringert wird.

2. Verfahren nach Anspruch 1, wobei der erste und der zweite Gewichtungsfaktor an die DU unter Verwendung einer "gNB-CU Configuration Update"-Nachricht übermittelt werden.

3. Verfahren nach Anspruch 1, das ferner umfasst:
Initiieren einer Löschung der zweiten TNLA, nachdem die Anzahl an UEs, die der zweiten TNLA zugewiesen sind, auf Null verringert ist.

4. Verfahren nach Anspruch 1, wobei:
die erste TNLA im Vergleich zur zweiten TNLA zunächst weniger mit UEs beladen ist
und
die Anzahl an der ersten TNLA zugewiesenen UEs nach einem Zeitraum, der auf dem zugewiesenen ersten und zweiten Gewichtungsfaktor basiert, im Wesentlichen gleich der Anzahl an der zweiten TNLA zugewiesenen UEs wird.

5. Verfahren nach Anspruch 4, wobei der erste und der zweite Gewichtungsfaktor an die DU unter Verwendung einer "gNB-CU Configuration Update"-Nachricht übermittelt werden.

6. Verfahren nach Anspruch 4, das ferner Folgendes umfasst:
Aktualisieren, durch die CU, des ersten und des zweiten Gewichtungsfaktors, so dass sie gleich sind, nachdem die Anzahl an der ersten TNLA zugewiesenen UEs im Wesentlichen gleich der Anzahl an der zweiten TNLA zugewiesenen UEs wird.

7. Verfahren nach Anspruch 1, wobei mindestens der Kommunikationsschritt unter Verwendung der F1-C-Schnittstelle durchgeführt wird.

## Revendications

1. Procédé permettant à un réseau d'accès radio en nuage, C-RAN, une unité centrale compatible, UC, de modifier au moins une association dynamique de couche de réseau de transport, TNLA, en communication avec une unité distribuée, UD, compatible C-RAN comprenant :
communiquer, par l'UC à l'UD, un premier facteur de pondération associé à un premier TNLA et un second facteur de pondération associé à une seconde TNLA, dans laquelle au moins un parmi i) le premier facteur de pondération associé à la première TNLA indique la sélection requise, et ii) le second facteur de pondération attribué pour la seconde TNLA indique la non-sélection requise ;
mettre à jour, par l'UD, les premier et second facteurs de pondération pour la première et la seconde TNLA, respectivement ; et
sélectionner automatiquement, par l'UD, la première TNLA pour tout nouveau EU nécessitant un service,
**caractérisé en ce que** :
la première TNLA est la TNLA à conserver, et la seconde TNLA est la TNLA à supprimer ; et
le nombre d'EU assignés à la seconde TNLA est réduit à zéro après une certaine période en fonction des facteurs des premier et second facteurs de pondération assignés.

2. Procédé selon la revendication 1, dans lequel les premier et second facteurs de pondération sont communiqués à l'UD à l'aide d'un message « gNB-CU Configuration Update ».

3. Procédé selon la revendication 1, comprenant :
le lancement d'une suppression de la seconde TNLA après que le nombre d'EU affectés à cette seconde TNLA est réduit à zéro.

4. Procédé selon la revendication 1, dans lequel :
la première TNLA est initialement moins chargée en EU que la seconde TNLA ; et
le nombre d'EU assignés à la première TNLA devient sensiblement égal au nombre d'EU assignés à la deuxième TNLA après une certaine période en fonction des premier et second facteurs de pondération assignés.

5. Procédé selon la revendication 4, dans lequel les premier et second facteurs de pondération sont communiqués à l'UD à l'aide d'un message « gNB-CU Configuration Update ».

6. Procédé selon la revendication 4, comprenant :
la mise à jour, par l'UC, les premier et second facteurs de pondération à être égaux après que le nombre d'EU attribués à la première TNLA devient sensiblement égal au nombre d'EU attribués à la seconde TNLA.

7. Procédé selon la revendication 1, dans lequel au moins l'étape de communication est effectuée à l'aide de l'interface F1-C.
